# EUROPEAN PATENT APPLICATION

(11) **EP 4 643 721 A1**
(43) Date of publication of application: **05.11.2025**
(21) Application number: 23911881.3
(22) Date of filing: 20.12.2023
(51) Int. Cl.: A47J 27/08, A23L 3/365, A23L 7/10, A47J 36/28, B65D 81/34

(54) **FROZEN SUSHI THAWING METHOD AND THAWING APPLIANCE SET**

(30) Priority: 28.12.2022 JP 2022212417; 14.04.2023 JP 2023066516
(71) Applicant: Cool-Japan Inc., Tokyo 130-0024 (JP)
(72) Inventor: KAKINUMA, Hiroyuki, Tokyo 130-0024 (JP); KADOWAKI, Naoko, Tokyo 130-0024 (JP)
(74) Representative: Hoffmann Eitle
(86) International application number: PCT/JP2023/045662
(87) International publication number: WO 2024/143101

(57) **Abstract**

Disclosed is a device for thawing frozen sushi, the device having a tray on which the frozen sushi is placeable with frozen rice as a lower surface, and being capable of applying vapor, water vapor, or steam to the lower surface from a hole provided in the tray at the time of thawing the frozen sushi, and a surroundings of the tray are open to ambient air during thawing of the frozen sushi.

## Description

### Technical Field

The present disclosure relates to at least one of a device for thawing frozen sushi, a food product including a device, a thawing unit for frozen sushi, or a thawing method for frozen sushi.

### Background Art

Sushi that has been frozen (hereinafter, also simply referred to as "frozen sushi") mainly includes two portions of rice and sushi topping (hereinafter, also referred to as "sushi neta" or simply the "topping"). For example, Edomae sushi that has been frozen generally has a form in which a frozen sushi-topping is placed on frozen rice. Here, it has been known that when frozen rice is thawed by a slow method such as natural thawing, a phenomenon called "white waxing" (Hakurou Phenomenon) occurs. White waxing refers to a phenomenon in which rice loses its moisture and becomes crumbly like wax, and the taste of rice deteriorates significantly when white waxing is occurs. The white waxing phenomenon is considered to be a phenomenon that occurs due to a combined action of agglomeration of starch when rice is thawed and aging of starch when rice is left at a low temperature.

In order to solve such a white waxing phenomenon, a thawing method for frozen sushi has been known in which frozen sushi including a cooked rice portion and a topping portion is heated using electromagnetic waves such that the temperature of the cooked rice portion is 60 to 95°C and the temperature of the topping portion is -2 to 20°C, and the heating is stopped (claims 1 and 2 of Patent Literature 1).

In addition, Patent Literature 2 discloses a technique of individually packaging rice and sushi topping in order to individually thaw the rice (a portion described as a "sushi rice ball" in Patent Literature 2, which is also referred to as a "rice ball") and the sushi topping. In Patent Literature 2, rice is thawed in a microwave oven, and sushi topping is thawed in running water (paragraph [0033] of Patent Literature 2). Furthermore, Patent Literature 3 discloses a technique related to a double container for storing frozen nigiri-sushi that can heat frozen nigiri-sushi by pouring hot water and a frozen nigiri-sushi stored object using the double container (paragraph [0001] of Patent Literature 3).

### Citation List

### Patent Literature

Patent Literature 1: JP 2017-23145 A
Patent Literature 2: JP 2007-82471 A
Patent Literature 3: JP 2016-84151 A

### Summary of Invention

### Technical Problem

However, in a case of using a microwave oven as in Patent Literatures 1 and 2, there is a problem in that frozen sushi cannot be thawed without a microwave oven and a power source. In addition, in a case of using a microwave oven to thaw frozen sushi, it is common that the entire sushi is irradiated with microwaves, and thus it is difficult to perform individual temperature management of rice and sushi topping.

In addition, in Patent Literature 2, since the rice and the sushi topping are individually packaged and individually thawed, the packaging cost increases and the time and effort for thawing increases. In particular, it takes time and effort to thaw the sushi topping under running water, and a large amount of water is required, which increases the environmental burden. Furthermore, in the method of Patent Literature 2, it is necessary to place the sushi topping on the rice after thawing, which increases the time and effort, and in addition, it is necessary for a provider or a diner of sushi to have a technique of making sushi (shaping sushi by hand).

On the other hand, in the thawing method by pouring hot water described in Patent Literature 3, it takes time to thaw frozen sushi, or thawing of frozen sushi may be insufficient. In particular, as in Patent Literature 3, in the thawing method in which hot water temperature lowers as time elapses due to lack of a heat source, it takes time to thaw frozen sushi, or thawing of frozen sushi may be insufficient. Furthermore, in Patent Literature 3, it is necessary to prepare hot water for making a hot water bath and to drain hot water after thawing. Therefore, time and effort are increased, and equipment for preparing and draining hot water is required.

In the thawing of frozen sushi, the rice is desired to be thawed by being rapidly and sufficiently heated, while the sushi topping is desired to be thawed by being slowly heated. For example, when the sushi topping is rapidly heated, the sushi topping that is originally supposed to be raw is overheated, and the sushi topping is boiled or cooked, so that the original taste, flavor, or texture of the sushi topping cannot be reproduced. As described above, when thawing frozen sushi, it is a problem to adopt a conflicting thawing method between the rice and the sushi topping, in other words, to adopt a thawing method that does not impair the texture of each of the rice and the sushi topping. Furthermore, it is a problem to develop a method capable of easily or quickly thawing frozen sushi as a method of thawing.

Therefore, at least an object of the present disclosure is to solve the above-described problems.

### Solution to Problem

In order to achieve the above object, the present disclosure provides, as one embodiment, a device for thawing frozen sushi, the device having a tray on which the frozen sushi is placeable with frozen rice as a lower surface, and being capable of applying vapor, water vapor, or steam to the lower surface from a hole provided in the tray at the time of thawing the frozen sushi, and a surroundings of the tray are open to ambient air during thawing of the frozen sushi.

With the device described above, an effect, as an example, is achieved that using vapor or the like for thawing frozen sushi prevents texture of each of the rice and the sushi topping from being impaired and makes it possible to thaw the frozen sushi easily and quickly.

Furthermore, the present disclosure provides, as an embodiment, a device in which the tray is provided with a guide indicating a position where the frozen sushi is to be placed.

With the device described above, an effect, as an example, is achieved that a placement position of frozen sushi is guided, and thus placing of the frozen sushi on the tray is facilitated.

Furthermore, the present disclosure provides, as an embodiment, a device in which the tray is provided with an uneven portion in a portion where frozen sushi is placed.

Furthermore, the present disclosure provides, as an embodiment, a device in which the tray is provided with a mesh portion through which vapor, water vapor, or steam is capable of passing, on a portion where frozen sushi is placed.

With the devices described above, an effect, as an example, is achieved in which thawed rice from sticking to a tray 11, or vapor or the like is easily applied to frozen sushi SS in a relatively even manner.

Furthermore, the present disclosure provides, as an embodiment, a food product including a device, the food product including the device disclosed in the present disclosure and frozen sushi placed on the tray of the device.

Furthermore, the present disclosure provides, as an embodiment, a thawing unit for frozen sushi, the thawing unit including the device disclosed in the present disclosure and a generating device of vapor, water vapor, or steam.

Furthermore, the present disclosure provides, as an embodiment, a thawing unit for frozen sushi, in which the generating device of vapor, water vapor, or steam includes a reaction container for reacting a heating material with water to generate the vapor, water vapor, or steam.

Furthermore, the present disclosure provides a thawing method for frozen sushi, the thawing method including: applying vapor, water vapor, or steam to a lower surface of frozen sushi placed on a tray of a device for thawing frozen sushi, from a hole provided in the tray in a state where the surroundings of the tray are open to ambient air, the frozen sushi being installed with the frozen rice as the lower surface.

By the method described above, an effect, as an example, is achieved that using vapor or the like for thawing frozen sushi prevents texture of each of the rice and the sushi topping from being impaired and makes it possible to thaw the frozen sushi easily and quickly.

### Brief Description of Drawings

Fig. 1 is a perspective view illustrating a device for thawing frozen sushi and a thawing unit including the device, according to an embodiment of the present disclosure.
Fig. 2 is a top view of a tray according to an embodiment of the present disclosure.
Fig. 3 is a top view of a tray including a guide indicating a placement position for frozen sushi, according to an embodiment of the present disclosure.
Fig. 4 is a cross-sectional view taken along line A-A of the tray of Fig. 3.
Fig. 5 is a cross-sectional view of the tray including an uneven portion, according to an embodiment of the present disclosure.
Fig. 6 is a cross-sectional view of the tray including a mesh portion, according to an embodiment of the present disclosure.
Fig. 7A shows results of experiments on thawing frozen sushi.
Fig. 7B shows results of experiments on thawing frozen sushi.
Fig. 7C shows results of experiments on thawing frozen sushi.
Fig. 7D shows results of experiments on thawing frozen sushi.
Fig. 7E shows results of experiments on thawing frozen sushi.
Fig. 7F shows results of experiments on thawing frozen sushi.
Fig. 7G shows results of experiments on thawing frozen sushi.
Fig. 7H shows results of experiments on thawing frozen sushi.
Fig. 7I shows results of experiments on thawing frozen sushi.

### Description of Embodiments

The present disclosure is a device for thawing frozen sushi, the device having a tray on which the frozen sushi is placeable with frozen rice as a lower surface, and being capable of applying vapor, water vapor, or steam to the lower surface from a through hole (hereinafter simply referred to as a hole) provided in the tray at the time of thawing the frozen sushi, and the surroundings of the tray are open to ambient air during thawing of the frozen sushi.

As described above, in a case of thawing frozen sushi, while there is a demand for rapidly heating and thawing rice, there is a demand for slowly thawing sushi topping placed on the rice or thawing at a temperature lower than the thawing temperature of the rice. A difficulty in developing a thawing method capable of thawing frozen sushi favorably, that is, obtaining sushi with excellent taste and good texture and the difficulty lies in needs of thawing frozen rice present on a lower side by rapid heating (or thawing at a high temperature), and sushi topping present on an upper side slowly (or thawing at a low temperature) for the frozen sushi having a form in which the frozen sushi-topping is on (in contact with) the frozen rice. In the prior art, it was impossible or it was difficult to realize this conflicting thawing method at a time, but the present inventors have intensively studied to realize this conflicting thawing method.

In a course of the above intensive study, the present inventors have found that by using vapor, water vapor, or steam (hereinafter, the "vapor, water vapor, or steam" may be collectively referred to as "vapor or the like") instead of the conventional method of using a microwave oven (electromagnetic wave), and applying vapor or the like from a lower surface of frozen sushi (exposing the lower surface to the vapor or the like), that is, a lower surface of frozen rice, in other words, a surface opposite to a surface on which sushi topping is placed, the frozen rice is quickly thawed by applying a certain amount of heat to the frozen rice, and at the same time, by opening surroundings of the frozen sushi to the ambient air at the time of thawing, the heat used for thawing the frozen rice is easily released to the surroundings, so that the thawing of the sushi topping can be slowed, and the above conflicting thawing method can be realized. In this thawing method, vapor or the like serves as a heating source for frozen sushi. Since frozen rice has a gap between rice grains, an effect is also achieved that while vapor or the like passes through the gap to thaw the frozen rice, heat for thawing escapes to the surroundings using the gap. For this reason, by opening the surroundings at the time of thawing frozen sushi, an effect of easily releasing vapor heat is exerted, and thus it is easy to perform thawing without damaging the sushi topping.

In order to realize the above conflicting thawing method, a device for thawing frozen sushi in the present disclosure has a tray on which the frozen sushi is able to be placed with frozen rice as a lower surface, and is capable of applying vapor, water vapor, or steam to the lower surface from a hole provided in the tray at the time of thawing the frozen sushi, and the surroundings of the tray are open to ambient air during thawing of the frozen sushi.

The following describes a device for thawing frozen sushi, a food product including a device, a thawing unit for frozen sushi, or a thawing method for frozen sushi according to an embodiment of the present disclosure.

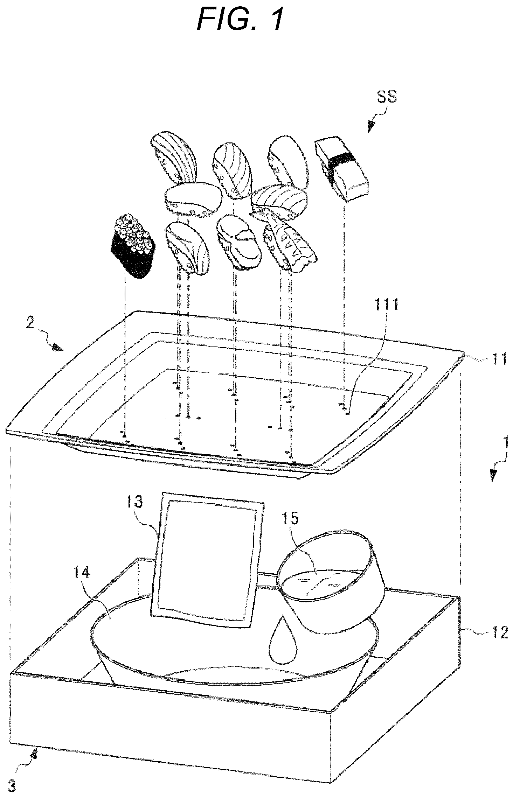

Fig. 1 is a perspective view illustrating a device for thawing frozen sushi and a thawing unit including the device, according to an embodiment of the present disclosure.

A thawing unit 1 for frozen sushi of the present embodiment includes a device 2 (hereinafter, also referred to as "thawing device 2") for thawing frozen sushi and a generating device 3 (hereinafter, "generating device 3 for vapor, water vapor, or steam" is also referred to as the "vapor or the like generating device 3") for generating vapor, water vapor, or steam. Here, the "device" is a concept including a container-shaped member in addition to a dish-shaped or plate-shaped member.

In the present embodiment, the thawing device 2 is disposed on an upper side of the vapor or the like generating device 3. However, as long as the vapor or the like generated by the vapor or the like generating device 3 can pass through a hole 111 from a lower side to an upper side of the hole 111, a positional relationship between the thawing device 2 and the vapor or the like generating device 3 is not limited. For example, it is also possible to adopt a configuration in which vapor or the like generated from the vapor or the like generating device 3 installed at an arbitrary place is guided to the lower side of the hole 111 via piping.

The thawing device 2 has a tray 11. Frozen sushi SS is placed on the tray 11. Specifically, on the tray 11, the frozen sushi SS is able to be placed with frozen rice as a lower surface. Types of the frozen sushi SS include nigiri sushi and gunkan sushi (sushi wrapped with nori on the outer side; gunkan-maki), but not limited thereto. In addition, a shape and a size of rice and a shape and a size of a topping are not limited, but it is preferable that at least a part of the rice portion is in contact with the tray 11 in a state where the frozen sushi SS is placed on the tray 11. In addition, it is preferable that the frozen sushi SS has been subjected to rapid freezing.

The hole 111 is provided in the tray 11. Specifically, the hole 111 is provided to a portion where the frozen sushi SS is placed, in the tray 11. The hole 111 enables vapor or the like generated from the vapor or the like generating device 3 to pass through at least from the lower side to the upper side of the hole 111. The vapor or the like that has passed through the hole 111 from the lower side to the upper side of the hole 111 comes into contact with the lower surface of the frozen rice of the frozen sushi SS placed on the tray 11. That is, at the time of thawing the frozen sushi SS, the thawing device 2 can apply vapor or the like to the lower surface of the frozen rice of the frozen sushi SS from the hole 111 provided in the tray 11.

In addition, the surroundings of the tray 11 are open to the ambient air. More specifically, at least at the time of thawing the frozen sushi SS, the surroundings of the tray 11 are open to the ambient air. Here, "the surroundings of the tray 11 are open to the ambient air" means that a configuration is made in which heat from the vapor or the like as a heating source does not stay in the vicinity of an area on the tray 11 on which the frozen sushi SS is placed. For example, "the surroundings of the tray 11 are open to the ambient air" may include that a configuration is made in which vapor or the like, which will be described later, generated from the vapor or the like generating device 3 and passed through the hole 111 does not stay in the area on the tray 11 on which the frozen sushi SS is placed. However, according to the above description, a configuration in which vapor or the like condensed (or dewed) into water droplets adheres to the surface of the tray 11 is not excluded from the content of the present disclosure. As will be described later, the fact that the surroundings of the tray 11 are open to the ambient air is advantageous in terms of preventing an undesirable phenomenon such as the sushi topping "being boiled" or "being cooked".

On the other hand, as described above, as long as the heat of the vapor or the like does not accumulate, another configuration, for example, a configuration having a lid formed on the upper side of the tray 11 may be adopted. Examples of other configurations that may be considered include a configuration having a lid capable of heat exchange or heat recovery, a configuration having a lid made of a material that allows vapor or the like to pass through but is impermeable to other substances (including the frozen sushi SS, water 15 to be described later, and the like), and a configuration having a lid with a vent. In addition, it is also possible to adopt a configuration in which a cooling system (may be a mechanical heat exchange system, or may simply be a system with a coolant placed thereon) is provided in the thawing unit 1 or the thawing device 2 regardless of the presence or absence of the lid or the presence or absence of the opening to the ambient air. In the example of Fig. 1, there is an advantage that a large-scale facility is unnecessary, whereas in the example including a cooling system, there is an advantage that heat control can be facilitated.

Specifically, at least the upper surface of the tray 11 of the present embodiment is open to the ambient air. Since the vapor or the like having passed through the hole 111 is considered to move further upward of the tray 11, it is possible to prevent the vapor or the like from staying in a placement part of the frozen sushi SS by opening the upper surface of the tray 11 to the ambient air. Furthermore, opening at least a part of a side surface of the tray 11 to the ambient air may prevent the vapor or the like from staying in the placement part of the frozen sushi SS. Furthermore, it is preferable that the tray 11 is configured such that at least a part of the side surface of the rice of the frozen sushi SS is open to the ambient air. When the configuration is made as described above, it is possible to prevent the vapor or the like from staying in a space inside the frozen sushi SS or in the surroundings in the vicinity of the frozen sushi SS.

The vapor or the like generating device 3 in the present embodiment includes an outer case 12 and a reaction container 14. Preferably, the vapor or the like generating device 3 (in an embodiment, the outer case 12 of the vapor or the like generating device 3) is connected to the thawing device 2 (in an embodiment, the tray 11 of the thawing device 2) and forms an enclosed space between the tray 11 except for the hole 111. Note that the outer case 12 and the reaction container 14 may be integrally configured, or may be individual members. For example, a configuration in which a part of the outer case 12 functions as the reaction container 14 can also be adopted.

Here, the "enclosed space except for the hole 111" in the present disclosure refers to an enclosed space to such an extent that most of the vapor or the like generated in the vapor or the like generating device 3 is capable of passing through the hole 111. In other words, the "enclosed space except for the hole 111" in the present disclosure includes a space through which vapor or the like is incapable of passing at all except for the hole 111, but is not limited thereto. By enclosing the space with the vapor or the like generating device 3 and the thawing device 2, it is possible to use most of the thermal energy of vapor or the like for thawing frozen sushi.

In addition, it is not always necessary that the space between the vapor or the like generating device 3 (or the outer case 12 of the vapor or the like generating device 3) and the tray 11 is enclosed. For example, in a case where (1) the vapor or the like generated from the vapor or the like generating device 3 is sufficient in amount or in a case where (2) the vapor or the like generated from the vapor or the like generating device 3 has a directional flow toward the hole 111, the space between the vapor or the like generating device 3 and the thawing device 2 does not need to be enclosed.

The reaction container 14 in the present embodiment is a container for reacting a heating material 13 with the water 15. The heating material 13 generates heat by reacting with the water 15 and provides thermal energy to the water 15. The reaction container 14 is configured such that the heating material 13 can be installed therein and the water 15 can be poured thereinto. The water 15 to which thermal energy is given by the heating material 13 boils (vaporizes) to become water vapor, moves upward from the reaction container 14, and passes through the hole 111. The water vapor (or steam made from condensed water vapor) that has passed through the hole 111 comes into contact with the lower surface of the frozen rice of the frozen sushi SS to thaw the frozen sushi SS.

At least a part of the water 15 that has been once vaporized and turned into water vapor may be subjected to condensation or the like before reaching the frozen sushi SS to become steam of fine water droplets. In addition, in a case where the heat output of the heating material 13 is not so large, a case may be conceivable where the water 15 does not reach boiling, and only steam instead of water vapor is generated from the reaction container 14. However, even steam can sufficiently retain thermal energy for thawing the frozen sushi SS. Furthermore, it can be said that even steam can sufficiently pass through the hole 111. Therefore, it is not limited to water vapor that is generated by the vapor or the like generating device 3 in the present disclosure or that passes through the hole 111 in the present disclosure, but it may be steam.

Furthermore, in a case where other potable liquid is used instead of the water 15, it may be vapor that is generated by the vapor or the like generating device 3, instead of water vapor.

The present embodiment is configured, in a case where the thawing device 2 is disposed on the upper side of the vapor or the like generating device 3, such that the reaction container 14 is located on the lower side of at least a part of the hole 111. When the reaction container 14 is located on the lower side of the hole 111, vapor or the like generated from the reaction container 14 naturally flows toward the hole 111. Therefore, in the present embodiment, it is easy to thaw the frozen sushi.

The vapor or the like generating device 3 is not limited to the configuration disclosed above. For example, as the vapor or the like generating device 3, a device that generates vapor or the like by heating water by an electric heating wire, gas heating, or other means can be adopted. One exemplary advantage of a case of using the heating material 13 is that a large-scale facility is unnecessary. On the other hand, examples of an exemplary advantage in a case of adopting a device using an electric heating wire or the like include lack of disposable member (or few disposable members), easiness of repeated use, and capability of thawing many pieces of frozen sushi at once.

The heating material 13 and the water 15 may be sold separately from the thawing unit 1 for frozen sushi, or may be prepared by a user of the thawing unit 1 for frozen sushi. In addition, the thawing device 2 and the vapor or the like generating device 3 may be separately sold. Both the thawing device 2 and the vapor or the like generating device 3 may be disposable or at least one may be reusable. In addition, the frozen sushi SS may be sold separately from the thawing unit 1 for frozen sushi, or may be sold in the form of a food product including a device together with at least a part (for example, the thawing device 2) of the thawing unit 1 for frozen sushi.

With the thawing unit 1 or the thawing device 2 for frozen sushi SS of the present embodiment, vapor or the like having passed through the hole 111 provided in the tray 11 comes into contact with the lower surface of rice of the frozen sushi SS. With such configuration, the thawing unit 1 or the thawing device 2 for frozen sushi SS of the present embodiment enables vapor or the like to thaw the frozen sushi SS.

The vapor or the like having passed through the hole 111 has a high temperature, and thus the rice of the frozen sushi SS is rapidly and sufficiently heated. Therefore, the thawing unit 1 or the thawing device 2 for frozen sushi SS of the present embodiment can solve the white waxing phenomenon of the frozen sushi SS.

Here, the vapor or the like having passed through the hole 111 comes into contact with the lower surface of the frozen sushi SS. However, in the present embodiment, not only the lower surface portion of the rice of the frozen sushi SS is thawed, but the entire frozen sushi SS is thawed. The reason why the entire frozen sushi SS is thawed even though vapor or the like is applied to the lower surface of the rice of the frozen sushi SS can be considered as described below.

The rice portion of the frozen sushi SS is an aggregate of rice grains that have been cooked and frozen, there is a sufficient gap between the rice grains for vapor or the like to pass therethrough. Therefore, it can be considered that vapor or the like having come into contact with the lower surface of the frozen rice of the frozen sushi SS rapidly and sufficiently heats not only the lower surface of the rice but also the entire rice of the frozen sushi SS, and thus thaws the entire rice.

However, the above description does not preclude the coexistence of other heat transfer methods in addition to the contents described above, such as conduction of heat from rice grains that have already been warmed to other rice grains.

Furthermore, vapor or the like having reached the sushi topping of the frozen sushi SS through the gaps between the rice grains has already transferred thermal energy to the frozen rice. Therefore, the vapor or the like having reached the sushi topping of the frozen sushi SS has lower thermal energy compared to the vapor or the like at the time of being generated. The vapor or the like having relatively low thermal energy heats the sushi topping slowly and at a low temperature. By such slow and low-temperature heating, the prevention of the sushi topping being boiled or cooked is realized.

Furthermore, in the present embodiment, at the time of thawing frozen sushi, the surroundings of the tray 11 are open to the ambient air. Thus, at the time of thawing frozen sushi, vapor or the like does not stay in the surroundings of the tray 11, and the vapor or the like is released to the ambient air. Therefore, in the present embodiment, it is possible to prevent staying vapor or the like, which still has high thermal energy, from giving excessive heat to the sushi topping portion. Thus, the prevention of the sushi topping being boiled or cooked is further ensured.

As described above, the thawing unit 1 or the thawing device 2 for frozen sushi SS of the present embodiment applies vapor or the like to the lower surface of the rice of the frozen sushi SS from the hole 111 provided to the tray 11, so as to realize individual temperature management of rice and sushi topping. Thus, the thawing unit 1 or the thawing device 2 for frozen sushi SS of the present embodiment can solve the white waxing phenomenon of the rice and prevent the sushi topping from being boiled or cooked. In addition, the thawing unit 1 or the thawing device 2 for frozen sushi SS of the present embodiment thaws the frozen sushi SS by using vapor or the like having a high temperature, and thus can thaw the frozen sushi SS relatively more quickly than by the thawing method described in Patent Literature 3, for example, can be thawed in 15 minutes.

In addition, in a case of using the thawing unit 1 or the thawing device 2 for frozen sushi SS of the present embodiment to thaw the frozen sushi SS, a facility such as a microwave oven or the like is unnecessary. Furthermore, the thawing unit 1 or the thawing device 2 for frozen sushi SS of the present embodiment does not need to separately thaw rice and sushi topping, and does not need to place the sushi topping on the rice after thawing.

At present, sushi is eaten worldwide, and thus it is required to realize a technique of thawing frozen sushi with minimum labor and cost regardless of eating location, presence or absence of cooking equipment, or presence or absence of a technique of making sushi (shaping sushi by hand) by a diner (or a sushi provider). In particular, in a case of providing frozen sushi in an environment in which use of fire is strictly prohibited and facilities are limited, such as the inside of an airplane or a ship, it is strongly required to thaw frozen sushi with minimum labor and cost regardless of eating location, presence or absence of cooking equipment, or presence or absence of a technique of making sushi (shaping sushi by hand) by a diner (or a sushi provider). The thawing unit 1 or the thawing device 2 for frozen sushi SS of the present embodiment provides a technique of thawing frozen sushi extremely easily with minimum labor and cost regardless of eating location, presence or absence of cooking equipment, or presence or absence of a technique of making sushi (shaping sushi by hand) by a diner (or a sushi provider).

Furthermore, the thawing unit 1 or the thawing device 2 for frozen sushi SS of the present embodiment thaws the frozen sushi SS by using vapor or the like. In other thawing procedures, for example, a thawing procedure in which frozen sushi is placed on a hot plate, drying of the frozen sushi proceeds with heating, and the original taste, flavor, or texture of sushi is lost. In the present embodiment, since the humidity of surroundings of the frozen sushi SS is maintained by using vapor or the like, there is an advantage that drying of frozen sushi at the time of thawing the frozen sushi can be prevented.

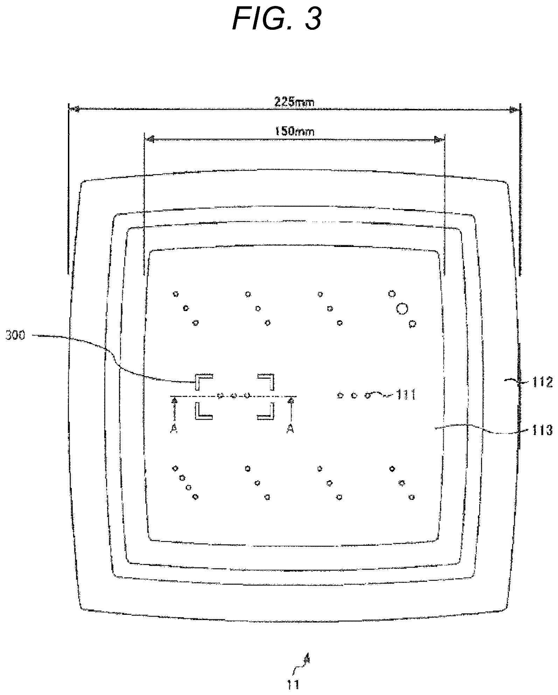

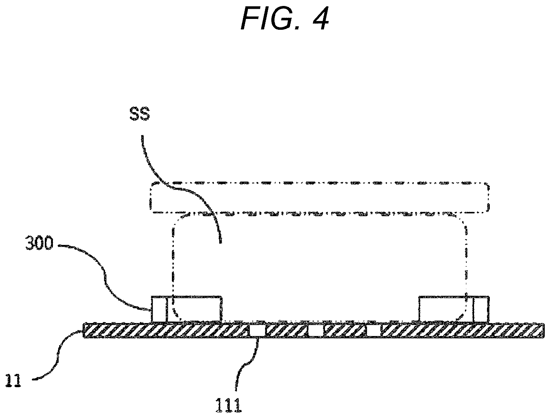

In addition to the above, as illustrated in Figs. 3 and 4, the tray 11 may be provided with a guide 300 indicating a position where the frozen sushi SS is to be placed. Since the position where the frozen sushi SS is placed is on the upper side of the hole 111, the position of the guide 300 is in the surroundings of the hole 111.

The guide 300 is provided to indicate a position where the frozen sushi SS is to be placed. A specific shape of the guide 300 may be designed in consideration of a thawing function and a handling property after thawing. Since the shape of the guide 300 is considered to affect the flow of vapor or the like, at the time of determining the shape of the guide 300, the flow of vapor or the like (eventually, the degree of thawing by vapor or the like) may be considered, for example. Since it may be considered that it is difficult for the diner to hold sushi by hand or chopsticks depending on the shape of the guide 300, at the time of determining the shape of the guide 300, easiness of holding sushi by the diner may be considered, for example. However, the above description does not limit the shape of the guide 300 at all.

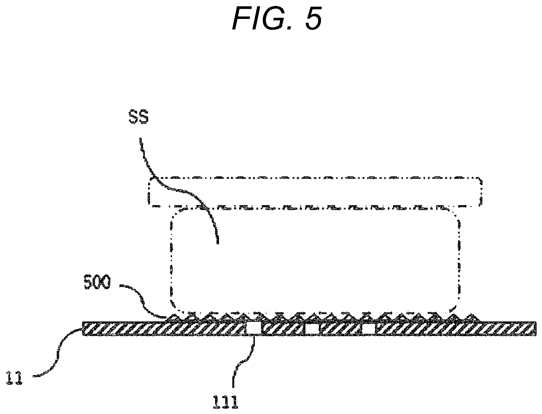

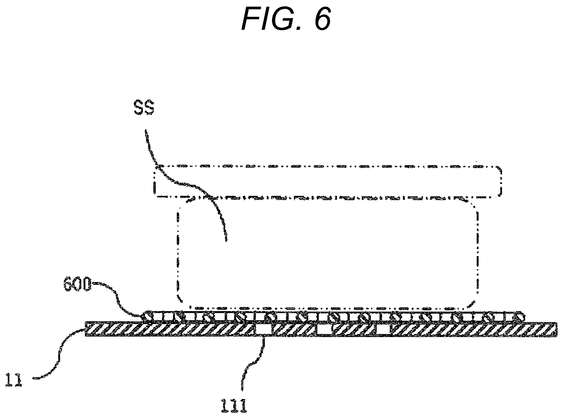

Fig. 3 is a top view of the tray 11 in an example in which the guide 300 is provided in a part of the tray 11. Fig. 4 is a cross-sectional view taken along line A-A in Fig. 3. However, in Fig. 4, for convenience of description, some expressions are simplified, and dimensions and the like of each member in Fig. 4 are not necessarily accurate. In addition, in Fig. 4, the frozen sushi SS is illustrated by an imaginary line (note that the points to be noted regarding Fig. 4 also correspond to Figs. 5 and 6 to be described later).

As in the examples of Figs. 3 and 4, the guide 300 may be formed by providing a physical or mechanical structure, for example, a protrusion on the tray 11. In a case of forming the guide 300 by providing the protrusion on the tray 11, it is preferable that the tray 11 including the guide 300 is configured such that at least a part of the side surface of the rice of the frozen sushi SS is open to the ambient air. When the configuration is made as described above, it is possible to prevent the vapor or the like from staying in a space inside the frozen sushi SS or in a space in the immediate vicinity of the frozen sushi SS.

In addition to or instead of providing the protrusion on the tray 11, the guide 300 may guide the placement position of the frozen sushi SS by visually representing the placement position. For example, a line indicating a placement position of frozen sushi may be adopted as the guide 300.

In addition, the guide 300 may be a guide that represents a type (for example, a type of sushi topping) of the frozen sushi SS to be placed. The type of the frozen sushi SS to be placed may be represented by, for example, text information, or may be represented by image information (a photograph, an illustration, or the like for each type of sushi topping). With the guide 300 described above, at the time of placing the frozen sushi SS on the tray 11, an appropriate type of frozen sushi SS can be placed, or the frozen sushi SS can be placed at an appropriate position.

As in the example of Fig. 3, the guide 300 may be provided only for some pieces of the frozen sushi SS. On the other hand, the guide 300 may be provided for all the pieces of the frozen sushi SS placed on the tray 11.

As still another example, as illustrated in Fig. 5, the tray 11 may be provided with an uneven portion 500 at a portion where the frozen sushi SS is placed. The uneven portion 500 may be formed by embossing, for example. Furthermore, as illustrated in Fig. 6, the tray 11 may be provided with a mesh portion 600 through which vapor or the like can pass at a portion where the frozen sushi SS is placed. The present disclosure also includes an example in which the tray 11 includes both the uneven portion 500 and the mesh portion 600.

A specific shape of the uneven portion 500 may be arbitrarily selected. In one example, the shape of the uneven portion 500 is a repeating uneven pattern smaller than the size of a rice grain of rice of the frozen sushi SS.

In addition, the size (mesh pitch) of a mesh, an aperture ratio, a wire diameter, a thickness, and other parameters of the mesh portion 600 may be arbitrarily selected. In one example, the mesh portion 600 includes a mesh having a smaller size than that of a rice grain of rice of the frozen sushi SS. In another example, the mesh of the mesh portion 600 may have an aperture ratio of about 70% (73.7%). In still another example, the mesh pitch may be about 1 mm. In still another example, the thickness of the mesh may be about 0.5 mm.

Providing the uneven portion 500 or the mesh portion 600 reduces a contact area between the tray 11 and the lower surface of the rice of the frozen sushi SS. In other words, when the uneven portion 500 or the mesh portion 600 is provided, a gap is formed between the tray 11 and a part of the lower surface of the rice of the frozen sushi SS. Thus, it can be considered that thawed rice can be prevented from sticking to the tray 11 or vapor or the like can be easily applied to the rice of the frozen sushi SS in a relatively even manner.

The reason why the mesh portion 600 exhibits the effect as described above is considered to be that (at least a part of) the frozen sushi SS does not come into direct contact with the tray 11, and (at least part of) vapor or the like is not directly blown to the frozen sushi SS. In view of the above, the "mesh portion" in the present disclosure is not limited to a simple net-like member, and includes a member that provides the above action and effect, for example, a sheet-like nonwoven fabric.

The uneven portion 500 or the mesh portion 600 may be provided across the entire upper surface of the tray 11 (a surface where the frozen sushi SS is placed). On the other hand, the uneven portion 500 or the mesh portion 600 may be provided on only a part of the tray 11. In addition, the uneven portion 500 or the mesh portion 600 is provided to prevent the rice of the frozen sushi SS from sticking to the tray 11, or to apply vapor or the like to the rice of the frozen sushi SS in a relatively even manner. Therefore, in one example, the uneven portion 500 or the mesh portion 600 is provided to the surroundings of at least one hole 111.

The following further describes the thawing method for frozen sushi of the present embodiment. The thawing method for frozen sushi of the present embodiment includes a step of applying vapor or the like from the hole 111 to the frozen sushi SS placed on the tray 11. Here, the frozen sushi SS is placed on the tray 11 with frozen rice as a lower surface. In addition, in a case of performing thawing of the frozen sushi SS, the surroundings of the tray 11 are open to the ambient air.

In addition, the thawing method for frozen sushi of the present embodiment may include a step of placing the frozen sushi SS on the tray 11 with frozen rice as a lower surface. The thawing method for frozen sushi of the present embodiment may include a step of generating vapor or the like. The step of generating vapor or the like may include, for example, a step of generating vapor or the like using the vapor or the like generating device 3. More specifically, the step of generating vapor or the like may include, for example, a step of reacting the heating material 13 with the water 15 inside the reaction container 14.

The thawing method for frozen sushi of the present embodiment may include a step of connecting the thawing device 2 and the vapor or the like generating device 3. The step of connecting the thawing device 2 and the vapor or the like generating device 3 may include a step of forming an enclosed space between the thawing device 2 and the vapor or the like generating device 3.

The thawing method for frozen sushi of the present embodiment described above does not require a facility such as a microwave oven or the like, and can realize individual temperature management of the rice and the sushi topping in the frozen sushi SS and can prevent the sushi topping from being boiled or cooked while solving the white waxing of rice. In addition, the thawing method for frozen sushi of the present embodiment provides a technique of thawing frozen sushi with minimum labor and cost regardless of eating location, presence or absence of cooking equipment, or presence or absence of a technique of making sushi (shaping sushi by hand) by a diner (or a sushi provider). Furthermore, the thawing method for frozen sushi of the present embodiment can prevent drying of frozen sushi at the time of thawing the frozen sushi.

The following further describes details of the present embodiment. For example, in Fig. 1, ten pieces of the frozen sushi SS are placed on the tray 11. In the example of Fig. 1, the hole 111 is provided at a position where one piece of frozen sushi is placed on the tray 11. In the example of Fig. 1, the number of the holes 111 for each frozen sushi, that is, the number of the holes 111 per one piece of frozen sushi is three. Here, the number of the holes 111 for each frozen sushi is not limited to three, but may be any desired number. However, from the viewpoint of evenly heating frozen sushi, preferably, the number of the holes 111 for each frozen sushi is two or more, or more preferably, three or more. In addition, in the example of Fig. 1, since the number of pieces of the frozen sushi SS is ten, a set of the three holes 111 are formed at each of ten positions where ten pieces of the frozen sushi SS are respectively placed on the tray 11.

In addition, the shape of the individual holes 111 may be, for example, a circular shape. In addition, the size of each hole 111 may be, for example, a diameter of 2 mm to a diameter of 5 mm. In a case where a plurality of the holes 111 is used for one piece of frozen sushi, the longest distance among the distances between the holes may be, for example, 16 mm to 22 mm.

The shape and the size of the holes 111, the distance between the holes, and the like (hereinafter, referred to as "the shape and the like of the hole 111") may be determined according to the size, the type, the freezing temperature, and the like (hereinafter, referred to as "the size and the like of the frozen sushi SS") of the frozen sushi SS. Where the temperature and the amount of vapor or the like required to thaw the frozen sushi SS vary depending on the size and the like of the frozen sushi SS, the temperature and the amount of the vapor or the like passing through the hole 111 can be adjusted by changing the shape and the like of the hole 111. In addition, the shape and the like of the hole 111 may be determined according to the position of the hole 111 on the tray 11, the positional relationship between the hole 111 and the vapor or the like generating device 3 (more specifically, a generation source of vapor or the like (in the example of Fig. 1, the reaction container 14)), and the temperature and the amount of the vapor or the like generated by the vapor or the like generating device 3, or the like (hereinafter, referred to as "position of the hole 111 on the tray 11, or the like"). Where the temperature and the amount of vapor or the like that passes through each hole 111 vary depending on the position of the hole 111 on the tray 11, or the like, the temperature and the amount of the vapor or the like that passes through the hole 111 can be adjusted by changing the shape or the like of the hole 111.

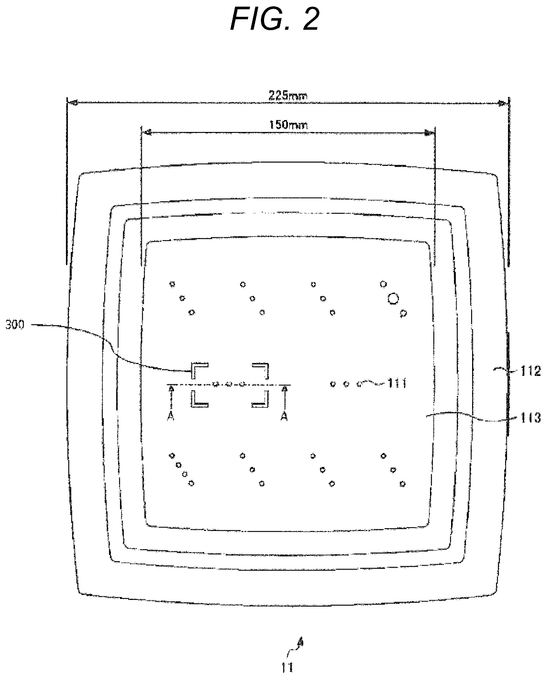

Fig. 2 is a top view of the tray 11. The tray 11 of Fig. 2 has dimensions of an outer periphery of 225 mm × 225 mm. In addition, the material of the tray 11 is a heat-resistant material in which talc (talcum) is combined with polypropylene. Furthermore, the tray 11 has an outer peripheral edge portion 112 and a sushi placement portion 113.

When the edge on the upper side of the outer case 12 comes into contact with the lower surface of the outer peripheral edge portion 112 (the surface opposite to the surface (upper surface) illustrated in Fig. 2), the thawing device 2 and the vapor or the like generating device 3 are connected to each other, and the tray 11 is disposed above the upper side of the opening of the outer case 12.

The sushi placement portion 113 is a flat portion formed in a state of being recessed from the outer peripheral edge portion 112, and has dimensions of 150 mm × 150 mm. In the sushi placement portion 113, the above-described hole 111 is formed at each placement location (ten locations in this example) of the frozen sushi SS.

The outer case 12 in Fig. 1 is a paper box having outer dimensions of 195 mm × 195 mm × a height of 70 mm, and an upper side thereof is opened (an opening is formed). When the edge on the upper side of the outer case 12 (a peripheral portion of the opening) comes into contact with the lower surface of the outer peripheral edge portion 112 of the tray 11, the tray 11 is connected onto the outer case 12.

In the present embodiment, the heating material 13 is mainly made of aluminum powder and calcium oxide powder, and as the heating material 13, a heating material is used that causes a primary reaction of the following chemical formula (1) and a secondary reaction of the following chemical formula (2) when coming into contact with the water 15.

CaO+H₂O→Ca(OH)₂ ... (1)

2Al+3Ca(OH)₂→3CaO·Al₂O₃+3H₂ ... (2)

Note that the heating material 13 is not particularly limited to the one adopted in the present embodiment, and any heating material can be adopted as long as the heating material causes exothermic reaction when coming into contact with the water 15 to generate vapor or the like having a high temperature.

In the present embodiment, the reaction container 14 is constituted by a heat-resistant tray having a size of 160 mm × 120 mm × a height of 40 mm. However, the reaction container 14 is not particularly limited to this, and any reaction container can be adopted as long as the reaction container has a material that is durable with heating of the heating material 13 and has a material and a size that the water 15 does not leak or spill. In addition, the reaction container 14 may be provided with a reference line indicating a suitable amount of water.

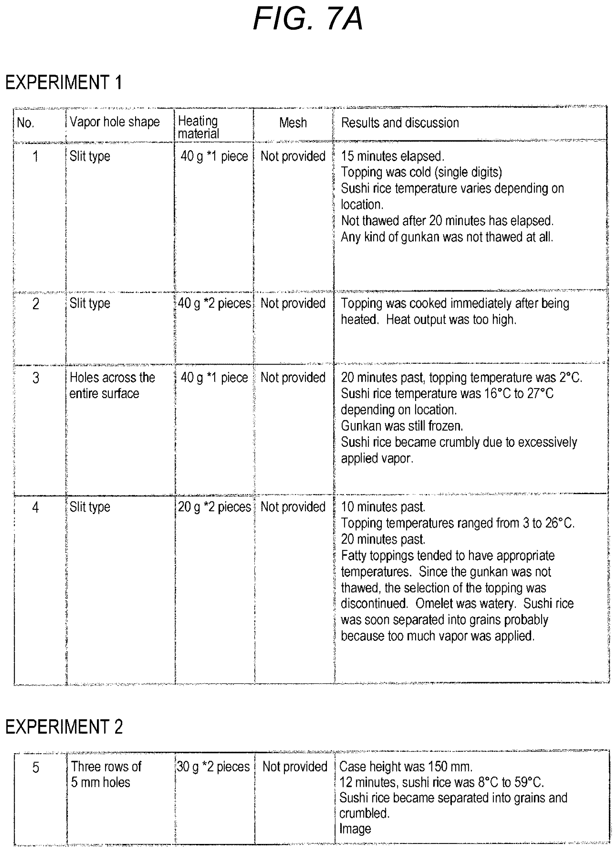

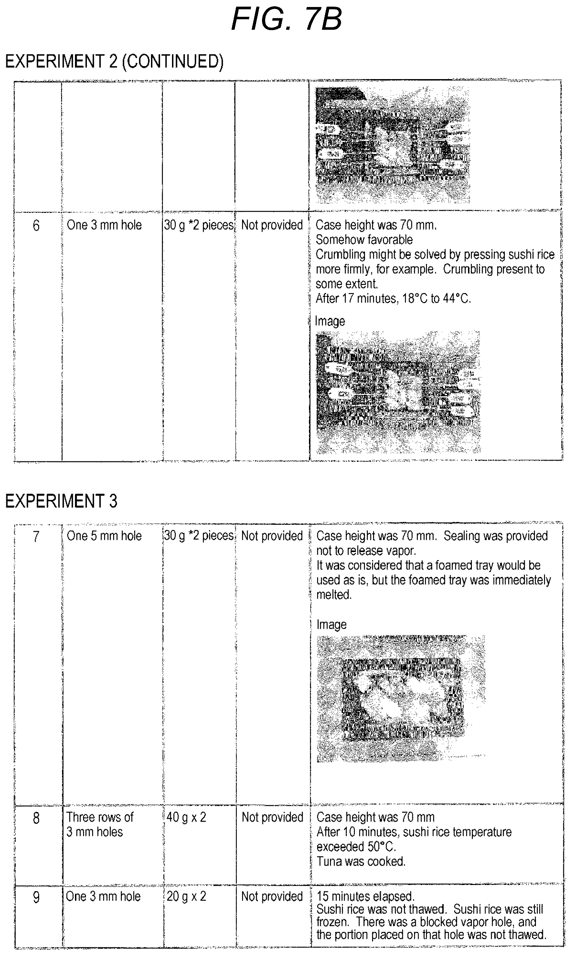

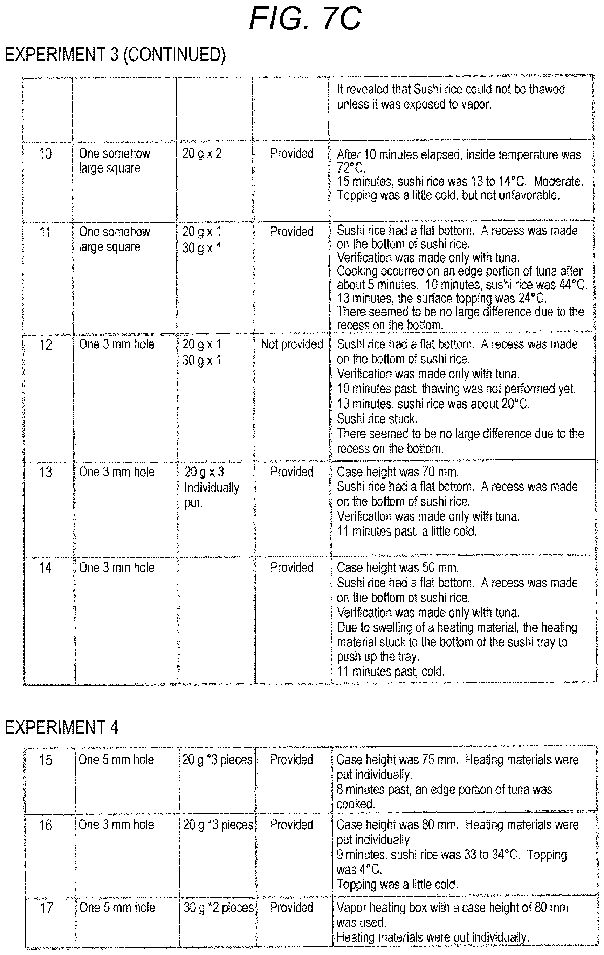

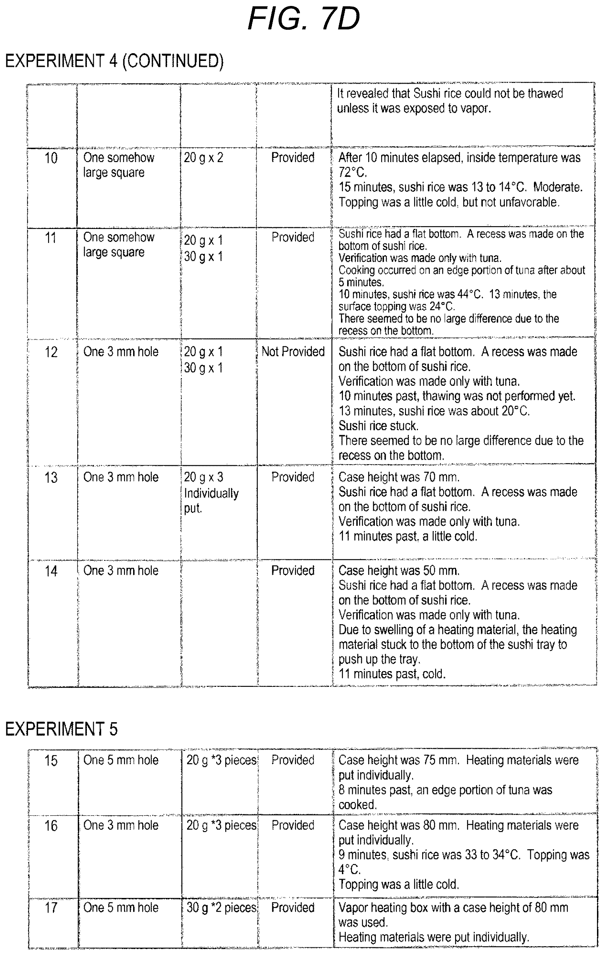

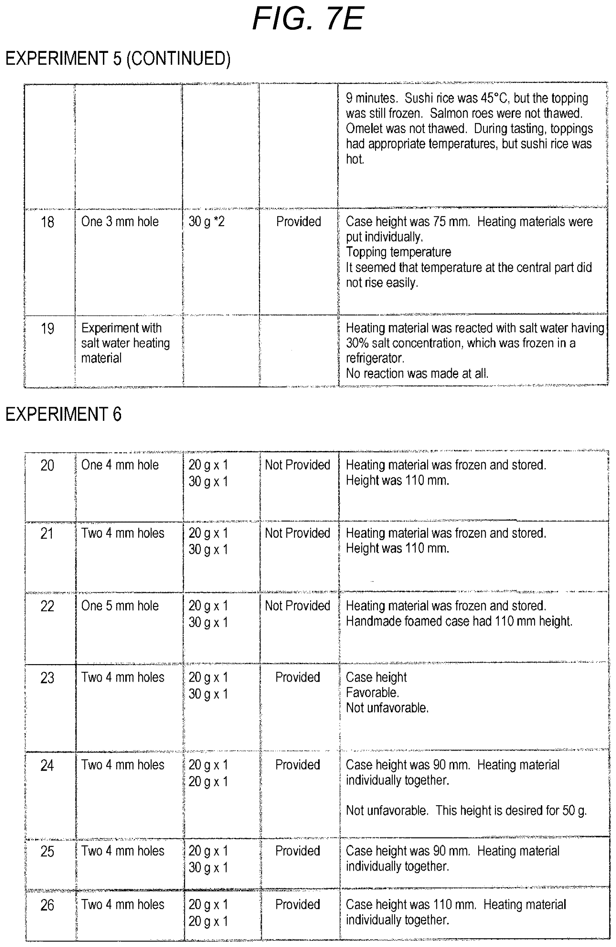

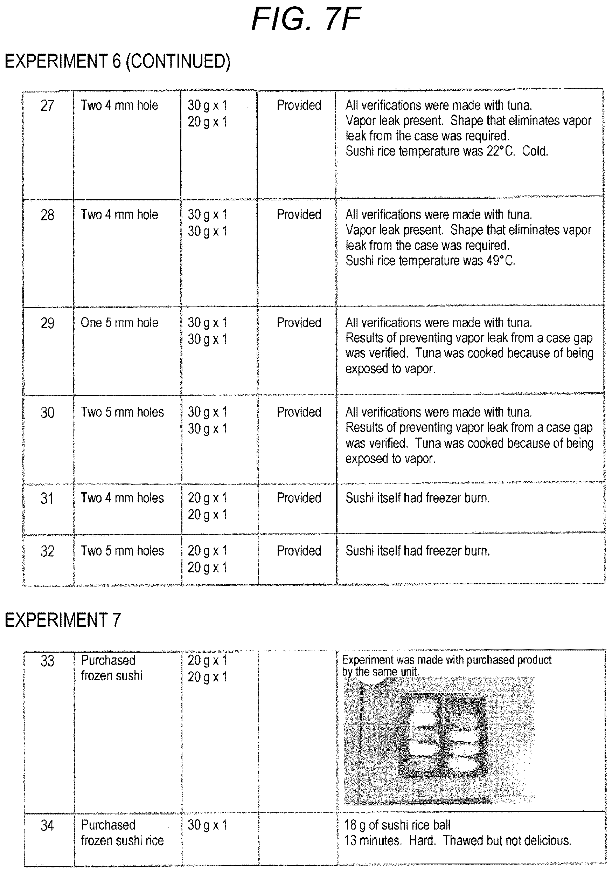

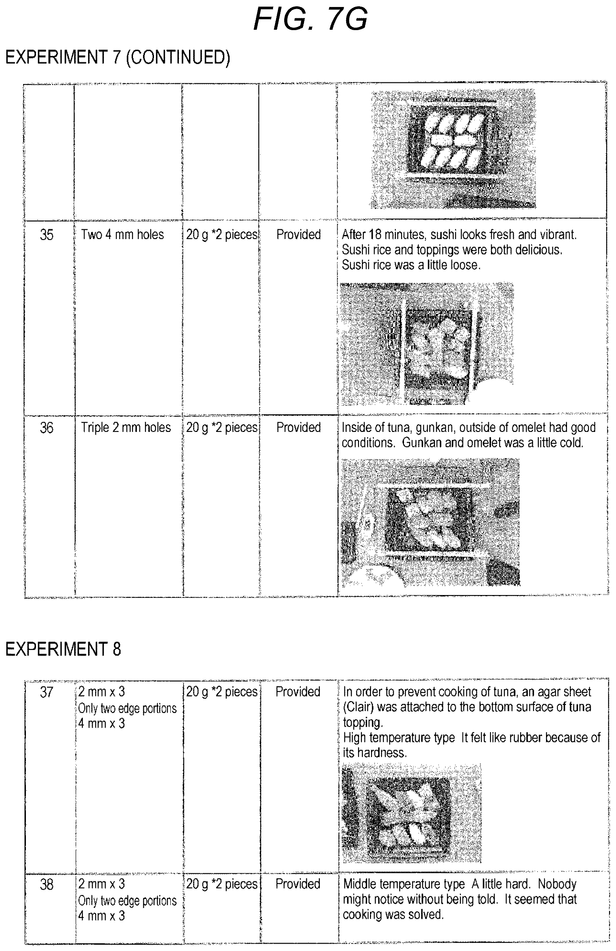

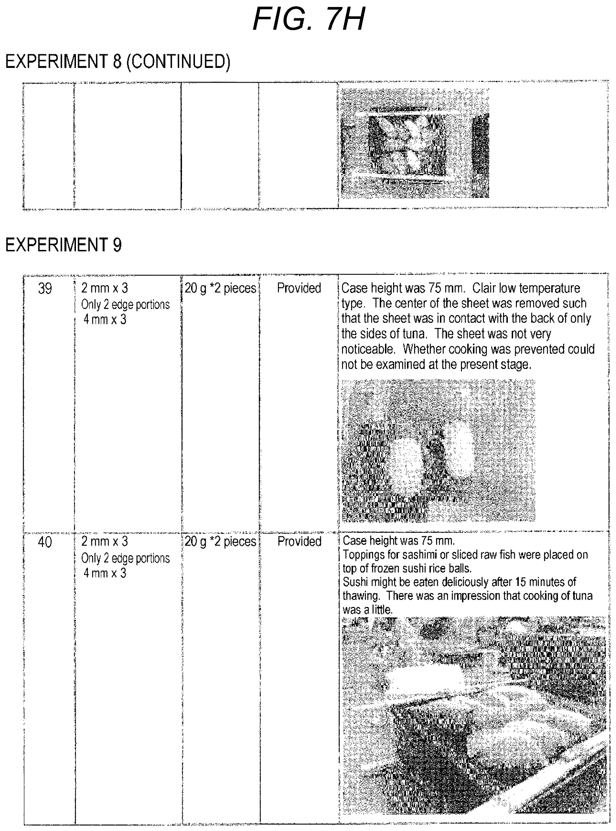

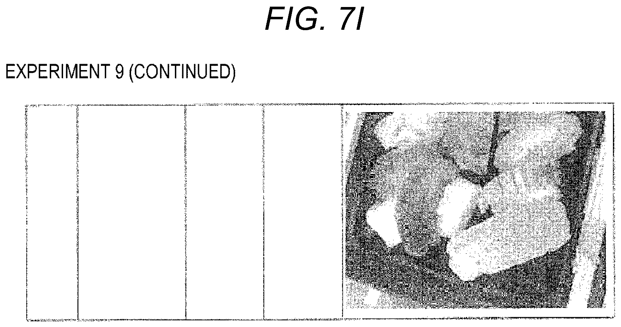

Figs. 7A to 7I show results of experiments in which the thawing unit 1 illustrated in Fig. 1 is used to perform thawing of ten types of toppings of sushi under different conditions. The conditions relate to the shape of the hole 111, the amount of heating material, and the presence or absence of the mesh portion 600. Specifically, the state of sushi after adding water, which releases vapor when reacting with heating material, and waiting for 15 minutes is recorded.

Although an embodiment of the present disclosure has been described above, the present disclosure is not limited to the above-described embodiment, and modifications, improvements, and the like within the scope of achieving the object of the present disclosure are included in the present disclosure. It should be noted that the advantages of the present embodiment described above are merely examples, and the scope of the present disclosure includes a configuration that achieves advantages other than the above-described advantages, and also includes a configuration that achieves only a part of the above-described advantages.

### Reference Signs List

- 1: Thawing unit for frozen sushi
- 2: Device for thawing frozen sushi (Thawing device)
- 3: Generating device of vapor, water vapor, or steam (Vapor or the like generating device)
- 11: Tray
- 12: Outer case
- 13: Heating material
- 14: Reaction container
- 15: Water
- 111: Hole
- 112: Outer peripheral edge portion
- 113: Sushi placement portion
- 300: Guide
- 500: Uneven portion
- 600: Mesh portion
- SS: Frozen sushi

## Claims

1. A device for thawing frozen sushi,
the device comprising a tray on which a frozen sushi is able to be placed with frozen rice as a lower surface, and
being capable of applying vapor, water vapor, or steam to the lower surface from a hole provided in the tray at a time of thawing the frozen sushi, and
a surroundings of the tray are open to ambient air during thawing of the frozen sushi.

2. The device according to claim 1, wherein
the tray is provided with a guide indicating a position where the frozen sushi is placed.

3. The device according to claim 1, wherein
the tray is provided with an uneven portion in an area where the frozen sushi is placed.

4. The device according to claim 1, wherein
the tray is provided with a mesh portion through which vapor, water vapor, or steam is capable of passing, in an area where the frozen sushi is placed.

5. A food product including a device, the food product comprising:
the device according to claim 1; and
frozen sushi placed on the tray of the device.

6. A thawing unit for frozen sushi, the thawing unit comprising:
the device according to claim 1; and
a generating device of vapor, water vapor, or steam.

7. The thawing unit for frozen sushi according to claim 5, wherein
the generating device of vapor, water vapor, or steam includes a reaction container for reacting a heating material with water to generate the vapor, water vapor, or steam.

8. A thawing method for frozen sushi, the thawing method comprising:
applying vapor, water vapor, or steam to a lower surface of frozen sushi placed on a tray of a device for thawing frozen sushi, from a hole provided in the tray in a state where surroundings of the tray are open to ambient air, the frozen sushi being placed with the frozen rice as the lower surface.
